# EUROPÄISCHE PATENTANMELDUNG

(11) **EP 1 321 333 A2**
(43) Veröffentlichungstag der Anmeldung: **25.06.2003**
(21) Anmeldenummer: 02026731.6
(22) Anmeldetag: 30.11.2002
(51) Int. Cl.: B60Q 9/00

(54) **Dialogsystem für Warn- und Informationssysteme**

(30) Priorität: 13.12.2001 DE 10161261
(71) Anmelder: DaimlerChrysler AG, 70567 Stuttgart (DE)
(72) Erfinder: Dobler, Günter, 73776 Altbach (DE); Hess, Markus, 73666 Baltmannsweiler (DE); Kincses, Wilhelm, 73732 Esslingen (DE); Rothe, Siegfried, 73770 Denkendorf (DE)

(57) **Zusammenfassung**

Zur Effizienzsteigerung von Warneinrichtungen ist es bekannt, Parameter veränderbar und somit in Abhängigkeit des Zustandes eines Nutzers der Warninformation adaptierbar zu gestalten. Hierbei werden beispielsweise Warnzeitpunkte verschoben oder mehrstufige Warnungen nach Dringlichkeit konzipiert. Der Nachteil eines solchen adaptiven Systems kann jedoch der sein, daß die maschinelle Erfassung des Fahrerzustandes durch unterschiedliche Sensorsysteme und die daran anschließenden Ausgaben an den Fahrer oder Assistenzsysteme vom Fahrer nicht immer akzeptabel sind und somit für Fahrer und Insassen irritierend sein können. Um die Akzeptanz durch die Nutzer der Warninformation zu steigern wird vorgeschlagen im Vorfeld einer geplanten Änderung in der Art und Weise der Ausgabe der Warninformation, mit mindestens einem der Nutzer eine Kommunikation aufzunehmen. Im Rahmen dieser Kommunikation kann dann der Nutzer seine Zustimmung oder Ablehnung bezüglich der geplanten Änderung zum Ausdruck bringen.

## Beschreibung

Die Erfindung betrifft ein Verfahren und eine Vorrichtung nach dem Oberbegriff der Patentansprüche 1 und 11.

Zur Steigerung der Verkehrssicherheit gibt es weltweit bei namhaften Automobilherstellern, Universitäten und Instituten Forschungsanstrengungen um Verfahren und Mittel zu finden den Zustand von Fahrzeuglenkern zu erkennen und vorteilhaft zu beeinflussen, insbesondere zur Aufdeckung von Konditionsdefiziten, wie Müdigkeit und zur Erkennung von Fahrerbelastung und -beanspruchung. Dies primär mit dem Ziel einen Fahrzeugführer über seinen Zustand multimedial (d.h. akustisch, optisch, haptisch und olfaktorisch ) zu informieren, zu warnen oder sogar in die Fahrdynamik durch Assistenzsysteme einzugreifen.

In Bezug auf die Warn- und Informationsfunktionen solcher Systeme ist es denkbar mehrerer der nachfolgenden Parameter veränderbar und somit in Abhängigkeit des Fahrerzustandes adaptierbar zu gestalten:
- Verschieben von Warnzeitpunkten
- Mehrstufige Warnungen nach Dringlichkeit konzipiert
- Wechsel des Ausgabemediums und dadurch Wechsel der Sinneskanäle
- Lautstärken- und Frequenzänderungen bei akustischen Warnsignalen
- Intensitäts- und Frequenzänderungen bei optischen Signalen
- Verstärken oder Verringern von haptischen Schwingungen und Momenten
- Unterdrücken von niederprioren Warnmeldungen und Informationen
- Erhöhung des Gegenmomentes der Lenkung ( Schwer-/Leichtgängigkeit )
- Verschieben der Zeitpunkte von Brems-, Beschleunigungs- und Lenkeingriffen.

Ein Warn- und Informationssystem mit einer entsprechenden Ausgestaltung ist beispielsweise aus der nachveröffentlichten Schrift DE 10103401 bekannt. Der Nachteil eines solchen adaptiven Systems kann jedoch der sein, daß die maschinelle Erfassung des Fahrerzustandes durch unterschiedliche Sensorsysteme und die daraus resultierende anschließende Art und Weise der Ausgabe der Warninformation an den Fahrer für diesen nicht immer akzeptabel sind und somit für den Fahrer aber auch die anderen Fahrzeuginsassen irritierend sein können.

Die Aufgabe der Erfindung ist es ein Verfahren nach dem Oberbegriff des Patentanspruchs 1 zu finden, dessen Akzeptanz durch den Nutzer der Warninformation, gegenüber den aus dem Stand der Technik bekannten Systemen, gesteigert ist.

Die weitere Aufgabe der Erfindung ist es ein für die Durchführung des Verfahrens geeignete Vorrichtung gemäß dem Oberbegriff des Patentanspruchs 11 zu finden.

Die erste Aufgabe wird durch ein Verfahren zur Steuerung eines Warnsystems gelöst, welches in bezug auf die Art und Weise der Ausgabe seiner Warninformation an das Verhalten oder den Zustand eines oder mehrerer Nutzer dieser Information oder an die in der Umgebung des Systems herrschende Situation dynamisch adaptierbar ist. Hierbei wird in erfinderischer Weise im Vorfeld einer geplanten Änderung in der Art und Weise der Ausgabe der Warninformation, mit mindestens einem der Nutzer eine Kommunikation aufgenommen. Im Rahmen dieser Kommunikation kann dann der Nutzer seine Zustimmung oder Ablehnung bezüglich der geplanten Änderung zum Ausdruck bringen.

Die weitere Aufgabe wird durch eine Vorrichtung zur Steuerung eines Warnsystems, welche über ein Einheit zur Ausgabe von Warninformation und eine Einheit zur Adaption der Art und Weise der Ausgabe dieser Warninformation an das Verhalten eines oder mehrerer Nutzer dieser Information oder an die in der Umgebung des Systems herrschende Situation verfügt, gelöst. Hierbei verfügt das Warnsystem in erfinderischer Weise zusätzlich über eine Kommunikationseinheit zur Kommunikation, mittels welcher wenigstens einer der Nutzer, seine Zustimmung oder Ablehnung mit einer geplanten Änderung zum Ausdruck bringen kann.

Vorteilhafte Ausgestaltungen und Weiterbildungen der Erfindung werden durch die Unteransprüche und die Figur beschrieben.

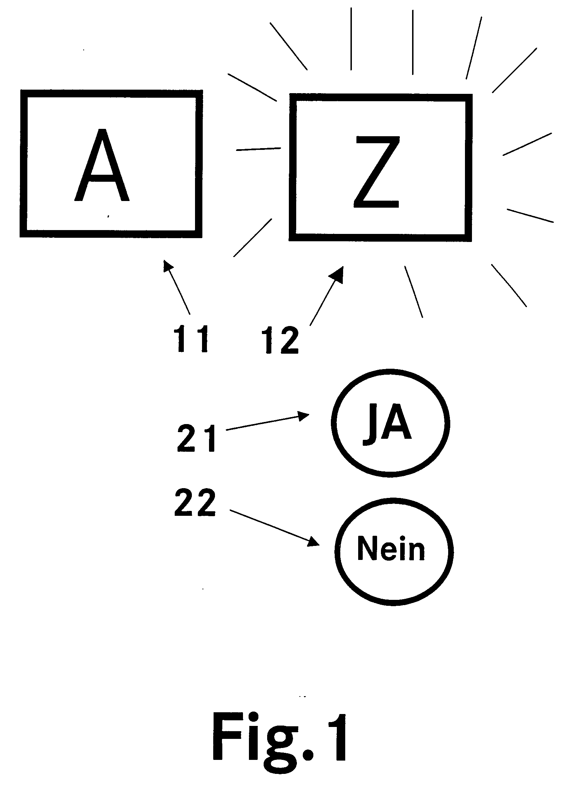

Figur 1 zeigt beispielhaft die Anordnung zur Kommunikation zwischen dem Warnsystem und einem Nutzer mit optischen Anzeigeelementen und Auswahlmitteln um geplante Änderungen akzeptieren oder ablehnen zu können.

Im allgemeinen wird das Warnsystem die Art und Weise wie es eine Warninformation einem Nutzer präsentiert nur dann ändern, wenn dieser im Rahmen der durch das Warnsystem initiierten Kommunikation eine Zustimmung zu dieser Änderung erhalten hat. Es ist jedoch auch denkbar, für diejenigen Fälle, in denen durch keinen der Nutzer eine Zustimmung oder Ablehnung zum Ausdruck gebracht wurde, nach Ablauf einer bestimmten Zeitspanne (beispielsweise: 5 Sekunden) das System diese Änderung der Art und Weise der Warninformation vornimmt. Auf diese Weise kann verhindert werden, dass nicht durch einen unaufmerksamer Nutzer wichtige Änderungen verhindert werden.

Generell sollte dann keine Änderung in der Art und Weise der Ausgabe der Warninformation erfolgen, wenn im Rahmen der Kommunikation zwischen Warnsystem und Nutzer eine Ablehnung der Änderung erfolgt. Es sind jedoch auf Fälle denkbar, welche es notwendig machen eine signifikant starke Änderung in der Art und Weise der Ausgabe der Warninformation zu veranlassen und in welchen Fällen dann in vorteilhafter Weise die Ablehnung der Änderung zumindest in Teilen ignoriert wird. Eine solche Situation ist beispielsweise bei der Warnung von Fahrzeuglenkern denkbar, bei welchen eine besonders aggressive Fahrweise erkannt wurde; solche Fahrzeuglenker tendieren dazu auch Änderungen im Warnverhalten (beispielsweise intensivere Warnsignale) abzulehnen.

Vor allem in dringenden Fällen (beispielsweise Gefahrensituation, welche einer schnellen Fahrerreaktion bedürfen) kann in gewinnbringender Weise von einer Kommunikation mit den Nutzern abgesehen werden. Dies insbesondere dann, wenn das Warnsystem erkennt, dass eine signifikant starke Änderung in der Art und Weise der Ausgabe der Warninformation notwendig ist. In diesen Fällen ist es in vorteilhafter Weise denkbar die Zustimmung zu der Änderung als gegeben anzusehen (implizite Annahme der vorgeschlagenen Änderung) und infolge dessen die geplante Änderung durchzuführen. In besonders gewinnbringender Weise kann von einer solchen impliziten Annahme ausgegangen werden, wenn durch ein Mittel zur Bestimmung der Blickrichtung der Nutzer festgestellt wird, dass diese, beispielsweise ein optisches Kommunikationssignal, nicht wahrnehmen können, weil Sie den Blick von der Anzeige abgewandt haben. Dies insbesondere in den Fällen, in welchen aus Dringlichkeitsgründen keine Zeit ist, darauf zu warten, dass die Nutzer wieder ihre Aufmerksamkeit dem Kommunikationsmittel zuwenden.

In besonders vorteilhafter Weise kann das erfindungsgemäße Verfahren so ausgestaltet werden, dass in denjenigen Fällen, in welchem die Ablehnung der Änderungen wenigstens in Teilen nicht akzeptiert wurden, oder in welchen das System unter Umgehung der Kommunikation (Anfrage an den Nutzer) selbsttätig entschieden hat, die Nutzer über die Änderung in der Art und Weise der Ausgabe der Warninformation in Kenntnis gesetzt werden.

In besonders vorteilhafter Weise erfolgt die Kommunikation zwischen dem Warnsystem und den Nutzern in Verbindung mit einem Sprachdialogsystem. Es ist gleichwohl aber auch denkbar ergänzend oder alternativ die Kommunikation zumindest unter Verwendung eines optischen Signalmittels und/oder einer graphischen Anzeigeeinheit vorzunehmen.

Gleichsam kann die Kommunikation auch haptische, olfaktorische und/oder akustische Kommunikationsmittel miteinbeziehen. So ist es beispielsweise denkbar auf eine geplante Änderung mittels akustischem Informationssignal oder Rütteln am Lenkrad aufmerksam zu machen.

Bezüglich der Ausgestaltung der erfinderischen Vorrichtung zur Steuerung eines Warnsystems, sollte dieses in jedem Falle neben einer Einheit zur Adaption der Art und Weise der Ausgabe dieser Warninformation an das Verhalten eines oder mehrerer Nutzer dieser Information oder an die in der Umgebung des Systems herrschende Situation, über eine zusätzliche Kommunikationseinheit verfügen. Dieser Kommunikationseinheit dient in erfinderischer Weise zur Kommunikation mit wenigstens einem der Nutzer der Warninformation, und umfasst Mittel mit Hilfe derer dieser seine Zustimmung oder Ablehnung mit einer geplanten Änderung in der Art und Weise der Ausgabe der Warninformation zum Ausdruck bringen kann.

Eine beispielhafte Anordnung zur Kommunikation zwischen dem Warnsystem und einem Kraftfahrzeugführer ist schematisch in Figur 1 dargestellt. Die Anordnung verfügt hierbei über zwei optische Anzeigeelemente 11 und 12, dargestellt als rechteckige Leuchten mit den Aufschriften A (Abstand vom vorausfahrenden Fahrzeugen) und Z (Zustand der Fahrbahn). Wird dem Warnsystem beispielsweise durch ein System zur Überwachung des Fahrbahnzustandes mitgeteilt, dass sich dieser zunehmend in einen für die Fahrsicherheit kritischen Zustand verändert, so mag es das Warnsystem für angemessen halten, den Fahrzeugführer auf Änderungen dieses Zustandes, wesentlich deutlicher und/oder schnel-1er aufmerksam zu machen. Diese geplante Änderung würde das Warnsystem in diesem Beispiel dem Fahrzeugführer durch Blinken des Anzeigeelementes 12 (angedeutet durch Striche um das Anzeigeelement) kundtun. Der Fahrzeuglenker könnte sodann entscheiden, ob er durch drücken eines der beiden kreisrunden Auswahlmitteln 21 und 22 die geplante Änderungen akzeptiert oder ablehnt, worauf das Anzeigeelement 12 mit dem Blinken aufhört.

In besonders vorteilhafter Weise läßt sich die Erfindung in Verbindung mit einem Kraftfahrzeug einsetzen, um Fahrzeuglenker oder Fahrzeuginsassen in möglichst optimaler, von diesen akzeptierten Art und Weise zu warnen.

Die Erfindung ist jedoch nicht auf die Verwendung mit Kraftfahrzeugen beschränkt, sondern kann beispielsweise auch gewinnbringend in jeglichem technischen Umfeld, in welchem Bedienoder Nutzpersonal gewarnt werden soll, verwendet werden; so beispielsweise in Leitständen bei der Überwachung von Kraftwerken oder Schienenanlagen.

## Patentansprüche

1. Verfahren zur Steuerung eines Warnsystems, welches in bezug auf die Art und Weise der Ausgabe seiner Warninformation an das Verhalten eines oder mehrerer Nutzer dieser Information oder an die in der Umgebung des Systems herrschende Situation dynamisch adaptierbar ist, **dadurch gekennzeichnet, dass** im Vorfeld einer geplanten Änderung in der Art und Weise der Ausgabe der Warninformation, das System mit mindestens einem der Nutzer eine Kommunikation aufnimmt, im Rahmen derer dieser seine Zustimmung oder Ablehnung bezüglich der geplanten Änderung zum Ausdruck bringen kann.

2. Verfahren nach Anspruch 1, **dadurch gekennzeichnet, dass** eine Änderung in der Art und Weise der Ausgabe der Warninformation dann erfolgt, wenn im Rahmen der Kommunikation eine Zustimmung hierzu erfolgt.

3. Verfahren nach einem der Ansprüche 1 oder 2, **dadurch gekennzeichnet, dass** für den Fall, dass nach Ablauf einer bestimmten Zeitspanne weder eine Zustimmung noch eine Ablehnung der geplanten Änderung erfolgte, das System diese Änderung der Art und Weise der Warninformation vornimmt.

4. Verfahren nach einem der Ansprüche 1 bis 3, **dadurch gekennzeichnet, dass** eine Änderung in der Art und Weise der Ausgabe der Warninformation nicht erfolgt, wenn im Rahmen der Kommunikation eine Ablehnung derselben erfolgt.

5. Verfahren nach Anspruch 4, **dadurch gekennzeichnet, dass** die Ablehnung durch mindestens einen der Nutzer ignoriert wird, wenn das Warnsystem erkannt hat, dass eine signifikant starke Änderung in der Art und Weise der Ausgabe der Warninformation notwendig ist oder der Nutzer durch von der Anzeigeeinheit abgewandten Blick die Änderung nicht wahrnimmt.

6. Verfahren nach Anspruch 5, **dadurch gekennzeichnet, dass** die Änderung im reduzierten Umfang gegenüber der ursprünglich geplanten Änderung durchgeführt wird.

7. Verfahren nach Anspruch 1, **dadurch gekennzeichnet, dass** in dem Fall, dass das Warnsystem erkennt, dass eine signifikant starke Änderung in der Art und Weise der Ausgabe der Warninformation notwendig ist, die Zustimmung zu der Änderung durch mindestens einen der Nutzer als gegeben ansieht und infolge dessen die geplante Änderung durchführt.

8. Verfahren nach einem der Ansprüche 3, 5, 6 oder 7, **dadurch gekennzeichnet, dass** der Nutzer über die Änderung in der Art und Weise der Ausgabe der Warninformation in Kenntnis gesetzt wird.

9. Verfahren nach einem der Ansprüche 1 bis 8, **dadurch gekennzeichnet, dass** die Kommunikation zumindest unter Verwendung eines Sprachdialogsystems erfolgt.

10. Verfahren nach einem der Ansprüche 1 bis 9, **dadurch gekennzeichnet, dass** die Kommunikation zumindest unter Verwendung eines optischen Signalmittels und/oder einer graphischen Anzeigeeinheit erfolgt.

11. Vorrichtung zur Steuerung eines Warnsystems, welche über ein Einheit zur Ausgabe von Warninformation und eine Einheit zur Adaption der Art und Weise der Ausgabe dieser Warninformation an das Verhalten eines oder mehrerer Nutzer dieser Information oder an die in der Umgebung des Systems herrschende Situation verfügt, **dadurch gekennzeichnet, dass** die Vorrichtung zusätzlich über eine Kommunikationseinheit mit wenigstens einem der Nutzer der Warninformation verfügt, mittels derer dieser seine Zustimmung oder Ablehnung mit einer geplanten Änderung in der Art und Weise der Ausgabe der Warninformation zum Ausdruck bringen kann.

12. Vorrichtung nach Anspruch 11, **dadurch gekennzeichnet, dass** die Kommunikationseinheit ein Sprachdialogsystem umfasst.

13. Vorrichtung nach einem der Ansprüche 11 oder 12, **dadurch gekennzeichnet, dass** die Kommunikationseinheit ein optisches Signalmittel und/oder eine graphische Anzeigeeinheit umfasst.

14. Vorrichtung nach einem der Ansprüche 11 bis 13, **dadurch gekennzeichnet, dass** die Kommunikationseinheit haptische, olfaktorische und/oder akustische Kommunikationsmittel miteinbezieht.

15. Vorrichtung nach einem der Ansprüche 11 bis 14, **dadurch gekennzeichnet, dass** das Warnsystem zusätzlich ein Mittel zur Erfassung der Blickrichtung wenigstens eines der Nutzer umfasst.

16. Verwendung eines Verfahrens oder einer Vorrichtung nach einem der vorhergehenden Ansprüche in einem Kraftfahrzeug.

17. Verwendung eines Verfahrens oder einer Vorrichtung nach einem der vorhergehenden Ansprüche in Leitständen zur Überwachung von Kraftwerken oder Schienenanlagen.
